# EUROPÄISCHE PATENTANMELDUNG

(11) **EP 4 748 226 A1**
(43) Veröffentlichungstag der Anmeldung: **27.05.2026**
(21) Anmeldenummer: 24215195.9
(22) Anmeldetag: 25.11.2024
(51) Int. Cl.: A01M 1/02, A01M 1/14

(54) **ÜBERWACHEN VON GLIEDERFÜSSERN**

(71) Anmelder: Bayer Aktiengesellschaft, 51373 Leverkusen (DE)
(72) Erfinder: Tempel, Matthias, 50935, Köln (DE); Born, Fabian Christian, 57319, Bad Berleburg (DE)
(74) Vertreter: BIP Patents

(57) **Zusammenfassung**

Die vorliegende Offenbarung befasst sich mit dem Überwachen von Gliederfüßern auf Basis von Bildaufnahmen.

Gegenstände der vorliegenden Offenbarung sind ein Kit, ein System und ein Verfahren.

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein Kit, ein System und ein Verfahren.

### EINLEITUNG

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Nutzpflanzen verursacht.

In der modernen Landwirtschaft spielen die Erfassung und Erkennung von Schädlingen innerhalb von landwirtschaftlich genutzten Flächen eine wichtige Rolle.

### ZUSAMMENFASSUNG

Diesen und weiteren Aspekten widmet sich die vorliegende Offenbarung.

Ein erster Gegenstand der vorliegenden Offenbarung ist ein System umfassend
- einen Grundkörper mit einer Aufnahmefläche zur Aufnahme eines mit Klebemittel versehenen Bogens,
- eine Haltevorrichtung zur Aufnahme eines, eine Kamera umfassenden IoT-Geräts,
- Abstandsmittel zum Fixieren der Haltevorrichtung in einem Abstand zur Aufnahmefläche des Grundkörpers,
- eine Einhausung zwischen Abstandsmittel und Grundkörper zum Schutz der Aufnahmefläche des Grundkörpers vor Umwelteinflüssen.

Ein weiterer Gegenstand der vorliegenden Offenbarung ist ein Kit umfassend:
- einen Grundkörper mit einer Aufnahmefläche zur Aufnahme eines mit Klebemittel versehenen Bogens,
- eine Haltevorrichtung zur Aufnahme eines, eine Kamera umfassenden IoT-Geräts,
- Abstandsmittel zum Fixieren der Haltevorrichtung in einem Abstand zur Aufnahmefläche des Grundkörpers,
- ein Faltbogen zum Erzeugen einer Einhausung zwischen Abstandsmittel und Grundkörper.

Ein weiterer Gegenstand der vorliegenden Offenbarung ist ein Verfahren umfassend:
- Bereitstellen eines Grundkörpers mit einer Aufnahmefläche zur Aufnahme eines mit Klebemittel versehenen Bogens,
- Bereitstellen einer Haltevorrichtung zur Aufnahme eines, eine Kamera umfassenden IoT-Geräts,
- Bereitstellen von Abstandsmitteln zum Fixieren der Haltevorrichtung in einem Abstand zur Fläche des Grundkörpers,
- Bereitstellen einer Einhausung,
- Befestigen der Einhausung an dem Grundkörper und der Haltevorrichtung,
- Fixieren der Haltevorrichtung in dem Abstand zur Aufnahmefläche des Grundkörpers mit Hilfe der Abstandsmittel.

### KURZE BESCHREIUNG DER ZEICHNUNGEN

Fig. 1 zeigt beispielhaft und schematisch ein System der vorliegenden Offenbarung und wie dieses aus den Komponenten erzeugt wird.
Fig. 2 zeigt beispielhaft und schematisch eine Einhausung.
Fig. 3 zeigt beispielhaft und schematisch einen Faltbogen, aus dem eine Einhausung erzeugt werden kann.

### AUSFÜHRLICHE OFFENBARUNG

Die Gegenstände der vorliegenden Offenbarung werden im Folgenden näher erläutert, ohne zwischen den Gegenständen der vorliegenden Offenbarung (System, Kit, Verfahren) zu unterscheiden. Vielmehr sollen die nachfolgenden Ausführungen sinngemäß für alle Gegenstände der Offenbarung gelten, unabhängig davon, in welchem Zusammenhang (System, Kit, Verfahren) sie beschrieben werden.

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Der Artikel "ein" bedeutet "ein oder mehrere"; es sei denn es steht ein "nur" oder "lediglich" davor. Dies gilt analog auch für den Artikel "eine".

Die Ausdrücke "basierend auf" und "auf Basis von" bedeuten "zumindest teilweise basierend auf', sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Ansonsten haben die in dieser Offenbarung verwendeten Begriffe die Bedeutung, die sie im Stand der Technik, insbesondere in dem in dieser Offenbarung angeführten Stand der Technik, haben.

Ein Gegenstand der vorliegenden Offenbarung ist ein System. Das System umfasst mehrere Komponenten (auch Bestandteile genannt). Das System ist aus diesen Komponenten zusammengebaut. Liegen die Komponenten vereinzelt (also nicht in zusammengesetzter Form) vor, bilden sie ein Kit. Ein solches Kit ist ein weiterer Bestandteil der vorliegenden Offenbarung. Ein Kit kann ein Verkaufsprodukt sein. Das bedeutet, die Komponenten des Kits können gemeinsam als ein Verkaufsprodukt angeboten werden. In einem Kit können die Komponenten so zusammengefasst werden (z.B. in einer gemeinsamen Verpackung), dass sie zusammen weniger Platz einnehmen als in Form des Systems der vorliegenden Offenbarung.

Mit anderen Worten: aus dem Kit der vorliegenden Offenbarung kann durch Zusammensetzen der Komponenten das System der vorliegenden Offenbarung erzeugt werden.

Auch das System der vorliegenden Offenbarung kann ein Verkaufsprodukt sein. Es ist auch möglich, dass nur das System der vorliegenden Offenbarung zum Kauf angeboten wird. Das System der vorliegenden Offenbarung kann in seine Komponenten zerlegt werden. Dies kann beispielsweise erfolgen, um das System besser säubern zu können.

Ein weiterer Gegenstand der vorliegenden Offenbarung ist ein Verfahren. Das Verfahren umfasst Schritte, die durchgeführt werden, um aus den vereinzelten Komponenten (z.B. in Form des Kits) das System der vorliegenden Offenbarung zu erzeugen. Das Verfahren der vorliegenden Offenbarung kann weitere Schritte umfassen.

Das System der vorliegenden Offenbarung kann eine Vorrichtung zum Überwachen von Gliederfüßern oder ein Teil davon sein.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

In einer anderen Ausführungsform der vorliegenden Offenbarung bezieht sich der Begriff "Gliederfüßer" ausschließlich auf Schädlinge für Nutzpflanzen.

Der Begriff "Überwachen" bedeutet üblicherweise, dass mit Hilfe des Systems der vorliegenden Offenbarung (ggf. in Kombination mit weiteren Mitteln) die Anwesenheit eines oder mehrerer Gliederfüßer in einem Bereich (z.B. in einem Feld für den Anbau von Kulturpflanzen) festgestellt werden kann

Eine Komponente des Kits/Systems ist ein Grundkörper. Der Grundkörper kann die Form eines Zylinders, eines Quaders, eines Würfels, eines Parallelepipeds, eines Kegelstumpfs, eines Pyramidenstumpfs oder eines anderen Körpers aufweisen. Der Grundkörper kann zu allen Seiten geschlossen sein. Der Grundkörper kann auch zu einer Seite geöffnet sein. Ist der Grundkörper zu einer Seite geöffnet, fehlt üblicherweise entweder die Grundfläche oder die Deckfläche. Für den Fall, dass die Grundfläche fehlt, ist der Grundkörper nach unten geöffnet; für den Fall, dass die Deckfläche fehlt, ist der Grundkörper nach oben geöffnet.

Es ist aber auch möglich, dass eine oder mehrere Seitenflächen fehlen.

In einer Ausführungsform hat der Grundkörper die Form eines geschlossenen oder zu einer Seite geöffneten Quaders (Kastenform). Hat der Grundkörper eine Kastenform, so fehlt üblicherweise die Grundfläche oder die Deckfläche; der Grundkörper kann also nach unten oder nach oben offen sein.

In einer Ausfuhrungsform hat der Grundkörper die Form eines geschlossenen oder nach oben oder unten offenen Quaders mit einer Grundfläche und/oder einer Deckfläche und Seitenflächen, wobei die Kanten, an denen die Seitenflächen aufeinandertreffen, abgerundet sein können.

In einer Ausfuhrungsform ist die Grundfläche und/oder die Deckfläche um ein Vielfaches größer als jede Seitenfläche.

In einer Ausfuhrungsform hat die Grundfläche und/oder die Deckfläche eine Größe im Bereich von 300 cm² bis 1300 cm².

In einer Ausfuhrungsform hat die Grundfläche und/oder die Deckfläche eine Größe im Bereich von 300 cm² bis 1000 cm².

In einer Ausfuhrungsform hat die Grundfläche und/oder die Deckfläche eine Größe im Bereich von 400 cm² bis 1000 cm².

In einer Ausfuhrungsform liegt die Höhe des Grundkörpers im Bereich von 3 mm bis 50 mm, wobei die Höhe der kürzeste Abstand zwischen der Grundfläche und der Deckfläche ist, wobei die Grundfläche oder die Deckfläche in dem Grundkörper fehlen kann und somit eine gedachte Fläche sein kann.

In einer Ausführungsform sind Grundfläche und Deckfläche ebene Flächen, wobei die Grundfläche oder die Deckfläche in dem Grundkörper fehlen kann und somit eine gedachte Fläche sein kann.

In einer Ausführungsform verlaufen die Grundfläche und die Deckfläche parallel zueinander, wobei die Grundfläche oder die Deckfläche in dem Grundkörper fehlen kann und somit eine gedachte Fläche sein kann.

Der Grundkörper stellt eine Fläche zur Aufnahme eines mit Klebemittel versehenen Bogens bereit (Aufnahmefläche).

Diese Aufnahmefläche ist üblicherweise die Deckfläche. Fehlt die Deckfläche, so hat der Grundköper die Form eines Behälters und der Boden des Behälters kann die Aufnahmefläche zur Aufnahme des mit Klebemittel versehenen Bogens bereitstellen.

In einer Ausführungsform der vorliegenden Offenbarung hat die Aufnahmefläche eine Größe von 180 mm x 230 mm bis 200 mm x 250 mm.

In einer weiteren Ausführungsform der vorliegenden Offenbarung hat die Aufnahmefläche eine Größe von 185 mm x 235 mm bis 195 mm x 245 mm.

Das Klebemittel dient zum Immobilisieren von Gliederfüßern. Das Klebemittel kann zum Beispiel ein Leim sein. Der Bogen kann biegbar sein und sich an die Form der Aufnahmefläche des Grundkörpers, auf der er platziert wird, anpassen. Der Bogen kann auch starr sein. Ist der Bogen starr ausgeführt, ist er üblicherweise eben (planar) ausgeführt.

Der Bogen kann zum Beispiel eine Tafel oder Karte (oder ein anderer Körper) sein, die mit einem Klebemittel, zum Beispiel einem Leim, beschichtet ist. Der Bogen kann rund (z.B. kreisförmig), elliptisch, dreieckig, viereckig, fünfeckig, sechseckig, siebeneckig, achteckig oder allgemein n-eckig sein, wobei n eine ganze Zahl sein kann, die größer als 2 ist. Der Bogen kann symmetrisch oder unsymmetrisch sein. In einer Ausführungsform der vorliegenden Offenbarung hat der Bogen die Form eines Rechtecks, wobei die Ecken abgerundet sein können. In einer Ausführungsform der vorliegenden Offenbarung entspricht das Seitenverhältnis des rechteckigen Bogens dem Seitenverhältnis eines Bildsensors der mindestens einen Kamera.

In einer Ausführungsform der vorliegenden Offenbarung hat der Bogen eine Ausdehnung im Bereich von 100 mm x 200 mmm bis 200 mm x 250 mm.

In einer weiteren Ausführungsform der vorliegenden Offenbarung hat der Bogen eine Ausdehnung im Bereich von 100 mm x 160 mmm bis 130 mm x 190 mm.

In einer weiteren Ausführungsform der vorliegenden Offenbarung hat der Bogen eine Ausdehnung im Bereich von 160 mm x 210 mmm bis 180 mm x 230 mm.

Die mit dem Klebemittel versehene Fläche des Bogens definiert einen Bereich, der in dieser Offenbarung auch als Sammelbereich bezeichnet wird.

Der Sammelbereich ist ein Bereich, der von Gliederfüßern aufgesucht werden kann. Durch das Klebemittel werden Gliederfüßer in dem Sammelbereich immobilisiert.

Als Lockmittel kann der Sammelbereich in einer Farbe gestaltet sein (z.B. gelb oder rot), die spezifische Gliederfüßer anlockt.

Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Der mit Klebemittel versehene Bogen kann auf der Aufnahmefläche des Grundkörpers platziert werden. Es ist möglich, dass Befestigungsmittel vorgesehen sind, um den Bogen zu fixieren. Solche Befestigungsmittel sind beispielsweise in der Europäischen Patentanmeldung Nr. 24180656.1 beschrieben, deren Inhalt durch Bezugnahme vollständig in diese Offenbarung aufgenommen sein soll. Es ist möglich, dass Begrenzungen in oder an dem Grundkörper vorhanden sind, die ein Verrutschen des Bogens verhindern.

Der mit Klebemittel versehene Bogen und/oder eine Rolle eines mit Klebemittel versehenen Bogens und/oder eine Mehrzahl an mit Klebemittel versehenen Bögen kann/können eine Komponente des Systems und/oder des Kits der vorliegenden Offenbarung sein.

Der Bogen und/oder die Rolle kann/können einseitig mit Klebemittel versehen sein.

Der Bogen und/oder die Rolle kann/können auf zwei gegenüberliegenden Seiten mit Klebemittel versehen sein. Das Klebemittel kann auf einer oder beiden Seiten durch eine Schutzfolie bedeckt sein, die vor dem Gebrauch entfernt werden kann.

Eine weitere Komponente des Kits/Systems der vorliegenden Offenbarung ist eine Haltevorrichtung. Die Haltevorrichtung dient der Aufnahme eines IoT-Geräts.

"IoT" ist die Abkürzung für "Internet of Things", was in deutscher Sprache "Internet der Dinge" bedeutet. Das Internet der Dinge (Internet of Things, IoT) bezieht sich auf ein Netz von Geräten, die mit dem Internet verbunden sind und Daten sammeln, austauschen und/oder verarbeiten können.

Ein "IoT-Gerät" ist ein eindeutig identifizierbares elektronisches Rechengerät, das konfiguriert ist, Daten über ein Netzwerk ohne die Notwendigkeit menschlicher Interaktionen von-Mensch-zu-Mensch oder von-Mensch-zu-Computer zu übertragen, zu empfangen, zu verarbeiten und/oder darauf zu reagieren. Ein "IoT-Gerät" ist üblicherweise mit Computerchips, Sensoren und Kommunikationshardware ausgestattet, die es ihm ermöglichen, Daten aus seiner Umgebung und/oder von anderen Geräten zu sammeln, zu senden und/oder zu empfangen. Ein IoT-Gerät funktioniert autonom innerhalb eines Internet-der-Dinge-Ökosystems, das vernetzte IoT-Geräte umfasst, die über das Internet und/oder andere Netzwerkinfrastrukturen kommunizieren und/oder interagieren. Ein IoT-Gerät zeichnet sich durch seine Fähigkeit aus, mit minimaler menschlicher Intervention zu operieren, wobei es eingebettete Software, Sensoren und Netzwerkkonnektivität nutzt, um seine festgelegten Funktionen auszuführen.

Das IoT-Gerät kann eine Komponente des Kits und/oder Systems der vorliegenden Offenbarung sein; das IoT-Gerät kann ein von dem Kit und/oder System der vorliegenden Offenbarung unabhängiges, separates Gerät sein.

Das IoT-Gerät umfasst mindestens eine Kamera.

Eine "Kamera" ist ein Gerät oder System, das dazu bestimmt ist, Bildaufnahmen von Objekten und/oder Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) und/oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die mindestens eine Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD- (CCD = *charge-coupled device*) oder CMOS-Sensoren (CMOS = *complementary metal-oxide-semiconductor*). Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

Die Haltevorrichtung ist eine Komponente, die, zusammen mit den Abstandsmitteln, dafür sorgt, dass das IoT-Gerät in einem definierten Abstand zur Fläche des Grundkörpers, auf der der mit Klebemittel versehene Bogen platziert wird, und damit in einem definierten Abstand zum Sammelbereich fixiert wird. Haltevorrichtung und Abstandsmittel sorgen dafür, dass die mindestens eine Kamera des IoT-Geräts auf den Sammelbereich gerichtet wird, damit mittels der mindestens einen Kamera Bildaufnahmen des Sammelbereichs erzeugt werden können. Der feste und definierte Abstand zum Sammelbereich ermöglicht eine definierte und gleichbleibende Abbildung des Sammelbereichs auf einem Kamerasensor (z.B. Bildsensor) der mindestens einen Kamera.

In einer Ausführungsform liegt der Abstand zwischen der Haltevorrichtung (Unterseite) und der Aufnahmefläche im Bereich von 5 cm bis 20 cm. In einer weiteren Ausführungsform liegt der Abstand zwischen der Haltevorrichtung (Unterseite) und der Aufnahmefläche im Bereich von 6 cm bis 20 cm. In einer weiteren Ausführungsform liegt der Abstand zwischen der Haltevorrichtung (Unterseite) und der Aufnahmefläche im Bereich von 7 cm bis 20 cm. In einer weiteren Ausführungsform liegt der Abstand zwischen der Haltevorrichtung (Unterseite) und der Aufnahmefläche im Bereich von 7 cm bis 19 cm. In einer weiteren Ausführungsform liegt der Abstand zwischen der Haltevorrichtung (Unterseite) und der Aufnahmefläche im Bereich von 7 cm bis 18 cm. In einer weiteren Ausführungsform liegt der Abstand zwischen der Haltevorrichtung (Unterseite) und der Aufnahmefläche im Bereich von 7 cm bis 17 cm. In einer weiteren Ausführungsform liegt der Abstand zwischen der Haltevorrichtung (Unterseite) und der Aufnahmefläche im Bereich von 7 cm bis 16 cm. In einer weiteren Ausführungsform liegt der Abstand zwischen der Haltevorrichtung (Unterseite) und der Aufnahmefläche im Bereich von 7 cm bis 15 cm. In einer weiteren Ausführungsform liegt der Abstand zwischen der Haltevorrichtung (Unterseite) und der Aufnahmefläche im Bereich von 5 cm bis 14 cm. In einer weiteren Ausführungsform liegt der Abstand zwischen der Haltevorrichtung (Unterseite) und der Aufnahmefläche im Bereich von 7 cm bis 13 cm. In einer weiteren Ausführungsform liegt der Abstand zwischen der Haltevorrichtung (Unterseite) und der Aufnahmefläche im Bereich von 7 cm bis 12 cm. In einer weiteren Ausführungsform liegt der Abstand zwischen der Haltevorrichtung (Unterseite) und der Aufnahmefläche im Bereich von 8 cm bis 12 cm.

Die Haltevorrichtung dient der Aufnahme des IoT-Geräts während die Abstandsmittel zum Befestigen der Haltevorrichtung an dem Grundkörper dienen. Haltevorrichtung und Abstandsmittel können in einer einzigen Komponente verein sein; es kann sich aber auch um separate, voneinander unabhängige Komponenten handeln, die in dem System der vorliegenden Offenbarung miteinander verbunden werden können. Die Ausführung in Form von separaten, voneinander unabhängigen Komponenten hat in Bezug auf das Kit der vorliegenden Offenbarung den Vorteil, dass die Komponenten platzsparender z.B. in einer Verpackung zusammengefasst werden können.

Die Abstandsmittel können ein Gestänge sein oder ein solches umfassen, das an der Haltevorrichtung befestigt ist oder wird und das mit dem Grundkörper befestigt werden kann.

Zur Befestigung der Abstandsmittel an der Haltevorrichtung und/oder dem Grundkörper können beispielsweise Steckverbindungen und/oder Schraubverbindungen und/oder Klemmverbindungen genutzt werden. Die Befestigungsmittel können reversibel ausgeführt sein, so dass ein Lösen der Verbindung zwischen Abstandsmittel und Haltevorrichtung und/oder zwischen Abstandsmittel und Grundkörper und erneutes Verbinden möglich sind. Dadurch wird auch ein Reinigen des Systems der vorliegenden Offenbarung erleichtert, da die Komponenten voneinander gelöst und dann separat sowie von allen Seiten gereinigt werden können.

In einer Ausführungsform umfasst die Haltevorrichtung ein Schubfach, in das das IoT-Gerät eingeschoben werden kann. Dazu kann das IoT-Gerät Führungsschienen aufweisen, die in entsprechende Nuten der Haltevorrichtung eingeführt werden; es ist aber auch möglich, dass die Haltevorrichtung Führungsschienen und das IoT-Gerät die dazu korrespondierenden Nuten umfasst. Führungsschienen und Nieten ermöglichen ein geführtes Einschieben des IoT-Geräts in die Haltevorrichtung entlang einer Schubrichtung, während ein Bewegen des IoT-Geräts in den zwei zur Schubrichtung senkrechten Richtungen durch entsprechende Begrenzungen verhindert wird. Das Einschieben des IoT-Geräts kann bis zu einem Anschlag erfolgen, der das weitere Einschieben des IoT-Geräts in die Haltevorrichtung verhindert, so dass das IoT-Gerät in der Haltevorrichtung eine definierte Position einnimmt. Rastelemente an dem IoT-Gerät und/oder Haltevorrichtung können ein Zurückrutschen des IoT-Geräts entgegen der Schubrichtung verhindern. Die Rastelemente können so ausgeführt sein, dass sie durch Zug, Druck oder eine andere Maßnahme die Fixierung des IoT-Geräts freigeben, damit das IoT-Gerät reversibel wieder aus der Haltevorrichtung entnommen werden kann.

In einer Ausführungsform umfasst die Haltevorrichtung mindestens eine Aussparung. Wird das IoT-Gerät mit der Haltevorrichtung verbunden, kommt mindestens ein Objektiv der mindestens einen Kamera oberhalb der Aussparung zu liegen, so dass elektromagnetische Strahlung, die vom Sammelbereich reflektiert, gestreut und/der gebeugt wird, durch die mindestens eine Aussparung und das mindestens eine Kameraobjektiv auf einen Kamerasensor (z.B. Bildsensor) der mindestens einen Kamera fallen und ein Abbild des Sammelbereichs auf dem mindestens einen Kamerasensor erzeugen kann.

Eine weitere Komponente des Kits und/oder Systems der vorliegenden Offenbarung ist eine Einhausung. Die Einhausung dient zum Schutz des Sammelbereichs vor Umwelteinflüssen wie beispielsweise Niederschlag, direkter Bestrahlung durch Sonnenlicht, Schmutz sowie Tieren und/oder Pflanzen, die größer als diejenigen Gliederfüßer sind, die in den Sammelbereich gelangen sollen.

Die Einhausung wird üblicherweise so mit dem Grundkörper verbunden, dass Aufnahmefläche und Einhausung ein Volumen definieren und/oder zumindest teilweise begrenzen, in dem der mit Klebemittel versehene Bogen platziert werden kann und vor Umwelteinflüssen geschützt ist. Dieses Volumen wird in dieser Offenbarung auch als Innenvolumen bezeichnet.

Die Einhausung umfasst üblicherweise mindestens zwei Wandungen und ist an die Form der Aufnahmefläche so angepasst, dass die Wandungen entlang von Kanten in Kontakt mit der Aufnahmefläche stehen oder gebracht werden können. Mit anderen Worten: die mindestens zwei Wandungen stehen bei dem System der vorliegenden Offenbarung auf der Aufnahmefläche und schließen bündig mit der Aufnahmefläche ab. Die Wandungen verlaufen in einem Winkel zur Aufnahmefläche, der beispielsweise im Bereich von 40° bis 140° oder 50° bis 130° oder 60° bis 120° oder 80° bis 100° oder 70° bis 90° oder 90° bis 120° oder 90° bis 110° liegen kann.

Die Winkelangaben beziehen sich in der vorliegenden Offenbarung auf die Winkel innerhalb des Innenvolumens.

In einer Ausführungsform ist die Aufnahmefläche rechteckig (wobei die Ecken abgerundet sein können) und die Einhausung umfasst vier Wandungen, zwei erste Wandungen und zwei zweite Wandungen, wobei die ersten Wandungen an gegenüberliegenden Seiten an der Aufnahmefläche angrenzen und die zweiten Wandungen an den zwei anderen gegenüberliegenden Seiten an der Aufnahmefläche angrenzen, wobei die ersten Wandungen mit der Aufnahmefläche einen Winkel von 90° bis 110° einschließen und wobei die zweiten Wandungen mit der Aufnahmefläche einen Winkel von 85° bis 95° einschließen.

Die mindestens zwei Wandungen des Gehäuses können eine oder mehrere Öffnungen aufweisen. Eine solche Öffnung kann dazu dienen, Gliederfüßern einen Zugang und/oder Zuflug zum Innenvolumen zu ermöglichen.

Die Öffnungen können eine beliebige Form aufweisen. Sie können beispielsweise rund (z.B. kreisförmig), elliptisch oder n-eckig sein, wobei n eine ganze Zahl sein kann, die größer als 2 ist. Die Öffnungen können die Form eines Vierecks (z.B. eines Rechtecks) oder eines anderen n-Ecks aufweisen, wobei die Ecken abgerundet sein können.

In einer Ausführungsform der vorliegenden Offenbarung sind Öffnungen in Wandungen rund (z.B. kreisförmig).

Die Einhausung umfasst üblicherweise eine Dachfläche. Üblicherweise grenzen zwei oder mehr (z.B. vier) Wandungen der Einhausung an die Dachfläche an.

In einer Ausführungsform der vorliegenden Offenbarung ist die Dachfläche größer als die Aufnahmefläche.

In einer Ausführungsform der vorliegenden Offenbarung umfasst die Dachfläche Teilflächen. In einer Ausführungsform ist mindestens eine der Teilflächen eben (planar) und verläuft parallel zur Aufnahmefläche. Diese Teilfläche wird in dieser Beschreibung (willkürlich) als die erste Teilfläche bezeichnet. Die Aufnahmefläche und die erste Teilfläche der Dachfläche weisen einen Abstand voneinander auf. Dieser Abstand ist vorzugsweise über die gesamte erste Teilfläche konstant (gleichbleibend).

In einer Ausführungsform ist die Aufnahmefläche größer als die erste Teilfläche. In einer anderen Ausführungsform ist die Aufnahmefläche kleiner als die erste Teilfläche.

In einer Ausführungsform grenzen zwei Teilflächen der Dachfläche an die erste Teilfläche der Dachfläche an. Diese werden in dieser Offenbarung (willkürlich) als die zweiten Teilflächen bezeichnet. In einer Ausführungsform schließen zwei zweite Teilflächen der Dachfläche die erste Teilfläche der Dachfläche ein, d.h. sie grenzen an gegenüberliegenden Seiten der ersten Teilfläche an diese an. In einer Ausführungsform ist die erste Teilfläche der Dachfläche rechteckig und an zwei gegenüberliegenden Seiten der ersten Teilfläche grenzen zwei zweite Teilflächen der Dachfläche an.

In einer Ausführungsform sind die zwei zweiten Teilflächen der Dachfläche eben (planar). In einer Ausführungsform sind die zwei zweiten Teilflächen der Dachfläche vom Innenvolumen gesehen nach außen gewölbt. In einer Ausführungsform sind die zwei zweiten Teilflächen der Dachfläche vom Innenvolumen gesehen nach innen gewölbt.

In einer Ausfuhrungsform sind die zwei zweiten Teilflächen eben und verlaufen jeweils in einem Winkel von 5° bis 120° zur Aufnahmefläche. In einer weiteren Ausfuhrungsform verlaufen die zwei zweiten Teilflächen jeweils in einem Winkel von 5° bis 90° zur Aufnahmefläche. In einer weiteren Ausfuhrungsform verlaufen die zwei zweiten Teilflächen jeweils in einem Winkel von 5° bis 60° zur Aufnahmefläche. In einer weiteren Ausfuhrungsform verlaufen die zwei zweiten Teilflächen jeweils in einem Winkel von 5° bis 45° zur Aufnahmefläche. In einer weiteren Ausführungsform verlaufen die zwei zweiten Teilflächen jeweils in einem Winkel von 5° bis 30° zur Aufnahmefläche.

In einer Ausfuhrungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 90° bis 175° ein. In einer Ausfuhrungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 120° bis 175° ein. In einer Ausführungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 135° bis 175° ein. In einer Ausführungsform sind die zwei zweiten Teilflächen der Dachfläche eben (planar), grenzen an gegenüberliegenden Seiten der rechteckigen ersten Teilfläche an die rechteckige erste Teilfläche an und schließen jeweils mit der ersten Teilfläche einen Winkel im Bereich von 150° bis 175° ein.

In einer Ausführungsform der vorliegenden Offenbarung definieren die Aufnahmefläche, die mindestens zwei Wandungen und die Dachfläche der Einhausung ein Gehäuse (das an ein Haus erinnert), bei dem das Dach die Form eines Mansardflachdaches hat. Dabei bildet die erste Teilfläche den flachen Teil des Mansardflachdaches.

Die erste Teilfläche stellt eine Fläche bereit, auf oder über der die Haltevorrichtung für das IoT-Gerät platziert und/oder befestigt werden kann.

Die erste Teilfläche und/oder die Haltevorrichtung umfassen üblicherweise Befestigungsmittel, die ein Befestigen der Haltevorrichtung an der ersten Teilfläche bzw. ein Befestigen der ersten Teilfläche an der Haltevorrichtung ermöglichen. Dabei können die Befestigungsmittel so ausgeführt sein, dass sich die Haltevorrichtung im befestigten Zustand im Innenvolumen oder außerhalb des Innenvolumens befindet.

In einer Ausführungsform der vorliegenden Offenbarung sind die Befestigungsmittel so ausgeführt, dass sich die Haltevorrichtung im befestigten Zustand außerhalb des Innenvolumens in Kontakt mit der ersten Teilfläche befindet. In dieser Ausführungsform weist die erste Teilfläche mindestens eine Öffnung auf. Diese mindestens eine Öffnung in der ersten Teilfläche bildet mit der mindestens einen Aussparung in der Haltevorrichtung mindestens eine gemeinsame Flucht, so dass elektromagnetische Strahlung, die von dem Sammelbereich reflektiert, gestreut und/oder gebeugt wird, durch die mindestens eine Öffnung der ersten Teilfläche und die Aussparung der Haltevorrichtung in mindestens ein Kameraobjektiv der mindestens einen Kamera des IoT-Geräts fallen kann, wenn sich das IoT-Gerät in der Haltevorrichtung befindet.

Die Öffnung in der ersten Teilfläche dient also dazu, dass elektromagnetische Strahlung vom Innenvolumen durch die mindestens eine Öffnung nach außen (außerhalb der Einhausung) treten kann.

Die Öffnung in der ersten Teilfläche kann rund (z.B. kreisförmig), elliptisch oder n-eckig sein, wobei n eine ganze Zahl sein kann, die größer als 2 ist. Ist die Öffnung n-eckig, können die Ecken abgerundet sein. In einer Ausführungsform der vorliegenden Offenbarung ist die Öffnung zumindest anteilig kreisförmig.

Üblicherweise wird das IoT-Gerät außerhalb der Einhausung auf der ersten Teilfläche oder oberhalb der ersten Teilfläche positioniert, so dass die mindestens eine Kamera des IoT-Geräts "von außen" Bildaufnahmen des Innenvolumens erzeugen kann.

Die Einhausung kann aus Papier, Pappe, Kunststoff, Metall, Glas und/oder einem Verbundwerkstoff gefertigt sein. Die mindestens zwei Wandungen und/oder die Dachfläche können aus dem gleichen Material gefertigt sein oder aus verschiedenen Materialien gefertigt sein. In einer Ausführungsform sind die mindestens zwei Wandungen und die Dachfläche aus dem gleichen Material gefertigt.

In einer Ausführungsform ist die Einhausung aus einem Kunststoff gefertigt. In einer Ausfuhrungsform ist die Einhausung aus einem Polymerwerkstoff gefertigt. In einer Ausfuhrungsform ist die Einhausung aus einem Polyproplyen gefertigt.

In einer Ausfuhrungsform ist das Material der Einhausung zumindest teilweise für elektromagnetische Strahlung im sichtbaren Bereich des elektromagnetischen Spektrums transparent.

In einer Ausführungsform ist zumindest das Material der Dachfläche der Einhausung zumindest teilweise für elektromagnetische Strahlung im sichtbaren Bereich des elektromagnetischen Spektrums transparent.

Der Transmissionsgrad kann beispielsweise größer als 10% oder größer als 20% oder größer als 30% oder größer als 40% oder größer als 50% oder größer als 60% oder größer als 70% oder größer als 80% oder größer als 90% sein.

Unter dem sichtbaren Bereich des elektromagnetischen Spektrums wird der Bereich von 380 nm bis 780 nm verstanden.

In einer Ausführungsform sind die mindestens zwei Wandungen und/oder die Dachfläche aus Kunststoffstegplatten gefertigt. In einer Ausführungsform sind die mindestens zwei Wandungen und/oder Dachfläche aus Kunststoffhohlkammerplatten gefertigt. In einer Ausführungsform sind die mindestens zwei Wandungen und die Dachfläche aus Polypropylenstegplatten gefertigt.

In einer Ausführungsform haben die Platten, die durch Stege miteinander verbunden sind, einen Abstand von 1 mm bis 6 mm voneinander. In einer Ausführungsform haben die Stege, die die Platten miteinander verbinden, einen Abstand von 1 mm bis 6 mm voneinander.

In einer Ausführungsform haben die Platten, die durch Stege miteinander verbunden sind, einen Abstand von 1 mm bis 5 mm voneinander. In einer Ausführungsform haben die Stege, die die Platten miteinander verbinden, einen Abstand von 1 mm bis 5 mm voneinander.

In einer Ausführungsform haben die Platten, die durch Stege miteinander verbunden sind, einen Abstand von 2 mm bis 4 mm voneinander. In einer Ausführungsform haben die Stege, die die Platten miteinander verbinden, einen Abstand von 2 mm bis 4 mm voneinander.

In einer Ausführungsform haben die Platten und die Stege eine Dicke (Wandstärke) von 0,2 mm bis 3 mm. In einer Ausführungsform haben die Platten und die Stege eine Dicke (Wandstärke) von 0,3 mm bis 2 mm. In einer Ausführungsform haben die Platten und die Stege eine Dicke (Wandstärke) von 0,4 mm bis 1 mm.

In einer Ausführungsform verlaufen die Stege der Stegplatten parallel zu der Aufnahmefläche und/oder ersten Teilfläche der Dachfläche.

In der vorliegenden Offenbarung werden Dachfläche und Teilflächen als Flächen bezeichnet - es ist natürlich klar, dass diese Flächen von dreidimensionalen Körpern bereitgestellt werden. Diese Bezeichnung soll darauf hinweisen, dass die dreidimensionalen Körper Ausdehnungen in zwei Dimensionen aufweisen, die um ein Vielfaches größer sind als die Ausdehnung in der dritten Dimension. Mit anderen Worten: es handelt sich bei den dreidimensionalen Körpern um "flache" Körper.

Jede Wandungsfläche ist Teil einer Wandung. Die Wandungen bilden die Wände der Einhausung. Die Dachfläche ist Teil eines Dachkörpers. Der Dachkörper bildet das Dach der Einhausung. Jede Teilfläche der Dachfläche ist ein Teilkörper des Dachkörpers.

In einer Ausführungsform hat der Dachkörper eine Dicke (Wandstärke) im Bereich von 1 mm bis 8 mm. In einer Ausfuhrungsform hat der Dachkörper eine Dicke (Wandstärke) im Bereich von 2 mm bis 7 mm. In einer Ausfuhrungsform hat der Dachkörper eine Dicke (Wandstärke) im Bereich von 2 mm bis 6 mm. In einer Ausfuhrungsform hat der Dachkörper eine Dicke (Wandstärke) im Bereich von 2 mm bis 5 mm. In einer Ausfuhrungsform hat der Dachkörper eine Dicke (Wandstärke) im Bereich von 3 mm bis 6 mm. In einer Ausfuhrungsform hat der Dachkörper eine Dicke (Wandstärke) im Bereich von 3 mm bis 5 mm.

In einer Ausfuhrungsform haben die mindestens zwei Wandungen jeweils eine Dicke (Wandstärke) im Bereich von 1 mm bis 8 mm. In einer Ausführungsform haben die mindestens zwei Wandungen jeweils eine Dicke (Wandstärke) im Bereich von 2 mm bis 7 mm. In einer Ausfuhrungsform haben die mindestens zwei Wandungen jeweils eine Dicke (Wandstärke) im Bereich von 2 mm bis 6 mm. In einer Ausfuhrungsform haben die mindestens zwei Wandungen jeweils eine Dicke (Wandstärke) im Bereich von 2 mm bis 6 mm. In einer Ausfuhrungsform haben die mindestens zwei Wandungen jeweils eine Dicke (Wandstärke) im Bereich von 3 mm bis 6 mm. In einer Ausfuhrungsform haben die mindestens zwei Wandungen jeweils eine Dicke (Wandstärke) im Bereich von 3 mm bis 5 mm.

In einer Ausfuhrungsform der vorliegenden Offenbarung kann die Einhausung aus einem Faltbogen erzeugt werden. In einer Ausführungsform der vorliegenden Offenbarung kann die Einhausung aus einem Faltbogen ohne Klebemittel erzeugt werden.

Der Faltbogen kann eine Komponente des Kits der vorliegenden Offenbarung sein.

Der Faltbogen ist ein einstückiges, zusammenhängendes Gebilde. Der Faltbogen umfasst eine Dachfläche und mindestens zwei Wandungsflächen.

Die Dachfläche und die mindestens zwei Wandungsflächen sind über Falze miteinander verbunden. Mit anderen Worten: der Faltbogen ist durch Falze in verschiedene Teilbögen unterteilt. Entlang der Falze lässt sich der Faltbogen falten, um die Winkel zwischen den Teilbögen zu verändern.

In einer Ausführungsform verlaufen alle Falze entlang gerader Linien.

In einer Ausführungsform verlaufen alle Falze parallel oder senkrecht zueinander.

Im ursprünglichen Zustand schließen benachbarte Teilbögen einen Winkel von 180°ein, so dass der Faltbogen insgesamt ein flächiges Gebilde ist. In einer Ausführungsform hat der Faltbogen eine Dicke (Wandstärke) im Bereich von 1 mm bis 8 mm. In einer Ausführungsform hat der Faltbogen eine Dicke (Wandstärke) im Bereich von 2 mm bis 7 mm. In einer Ausführungsform hat der Faltbogen eine Dicke (Wandstärke) im Bereich von 2 mm bis 6 mm. In einer Ausführungsform hat der Faltbogen eine Dicke (Wandstärke) im Bereich von 2 mm bis 5 mm. In einer Ausführungsform hat der Faltbogen eine Dicke (Wandstärke) im Bereich von 3 mm bis 6 mm.

In einer Ausführungsform ist der Faltbogen aus einer Polypropylenstegplatte gefertigt.

In einer Ausführungsform haben die Platten, die durch Stege miteinander verbunden sind, einen Abstand von 1 mm bis 6 mm voneinander. In einer Ausführungsform haben die Stege, die die Platten miteinander verbinden, einen Abstand von 1 mm bis 6 mm voneinander.

In einer Ausführungsform haben die Platten, die durch Stege miteinander verbunden sind, einen Abstand von 1 mm bis 5 mm voneinander. In einer Ausführungsform haben die Stege, die die Platten miteinander verbinden, einen Abstand von 1 mm bis 5 mm voneinander.

In einer Ausführungsform haben die Platten, die durch Stege miteinander verbunden sind, einen Abstand von 2 mm bis 4 mm voneinander. In einer Ausführungsform haben die Stege, die die Platten miteinander verbinden, einen Abstand von 2 mm bis 4 mm voneinander.

In einer Ausführungsform haben die Platten und die Stege eine Dicke (Wandstärke) von 0,2 mm bis 3 mm. In einer Ausfuhrungsform haben die Platten und die Stege eine Dicke (Wandstärke) von 0,3 mm bis 2 mm. In einer Ausfuhrungsform haben die Platten und die Stege eine Dicke (Wandstärke) von 0,4 mm bis 1 mm.

In einer Ausführungsform wird jeder der mindestens zwei Wandungsfläche durch einen Falz von der Dachfläche getrennt.

Die Dachfläche des Faltbogens umfasst drei Teilflächen, eine erste Teilfläche, und zwei zweite Teilflächen.

In einer Ausfuhrungsform wird die erste Teilfläche der Dachfläche durch Falze an gegenüberliegenden Seiten der ersten Teilfläche von den zweiten Teilflächen der Dachfläche getrennt.

In einer Ausführungsform ist eine der zwei zweiten Teilflächen der Dachfläche des Faltbogens über einen Falz mit einer ersten Wandungsfläche verbunden und die andere der zwei zweiten Teilflächen über einen Falz mit einer zweiten Wandfläche verbunden.

In einer Ausführungsform ist die erste Teilfläche der Dachfläche durch einen Falz mit einer dritten Wandungsfläche verbunden und durch einen weiteren Falz mit einer vierten Wandungsfläche verbunden.

In einer Ausführungsform wird die rechteckige erste Teilfläche der Dachfläche entlang zwei gegenüberliegenden Seiten von den zwei zweiten Teilflächen der Dachfläche eingeschlossen und entlang der zwei anderen gegenüberliegenden Seiten von zwei Wandungsflächen eingeschlossen.

Die mindestens zwei Wandungsflächen können eine oder mehrere Öffnungen aufweisen. Durch diese Öffnungen können Gliederfüßer in das Innenvolumen der aus dem Faltbogen erzeugten Einhausung gelangen. Ferner weist die erste Teilfläche eine Öffnung auf, durch die eine Kamera von außen Bildaufnahmen des Innenvolumens der aus dem Faltbogen erzeugten Einhausung erzeugen kann.

Die Öffnungen können beispielsweise durch Ausstanzungen in den Faltbogen eingebracht sein.

In einer Ausführungsform der vorliegenden Offenbarung sind die Öffnungen durch Perforationen und/oder Stanzungen und/oder Kerbungen vordefiniert, so dass die Öffnungen einfach durch einen Nutzer durch Herausdrücken der von den Perforationen und/oder Stanzungen und/oder Kerbungen umrandeten Teile erzeugt werden können.

In einer Ausführungsform der vorliegenden Offenbarung sind Perforationen und/oder Stanzungen und/oder Kerbungen vorhanden, die potenzielle Öffnungen unterschiedlicher Größe definieren, so dass ein Nutzer zwischen verschieden großen Öffnungen wählen kann.

Das System und/oder Kit können weitere Komponenten umfassen.

Eine weitere Komponente kann eine Beleuchtungseinheit sein.

Zur Abbildung des Sammelbereichs auf einem oder mehreren Bildsensoren der Kamera des IoT-Geräts ist eine Lichtquelle erforderlich, mit der der Sammelbereich beleuchtet wird, so dass Licht (elektromagnetische Strahlung im infraroten, sichtbaren und/oder ultravioletten Bereich des elektromagnetischen Spektrums) vom beleuchteten Sammelbereich in Richtung Kamera gestreut/reflektiert/gebeugt wird. Hierzu kann das Tageslicht verwendet werden. Es ist aber auch denkbar, eine Beleuchtungseinheit zu verwenden, die für eine definierte, vom Tageslicht unabhängige Beleuchtung sorgt. Diese kann beispielsweise seitlich neben der Kamera angebracht sein, so dass es zu keinem Schattenwurf der Kamera auf den Sammelbereich kommt.

Es ist auch denkbar, eine Beleuchtungseinheit unterhalb des Sammelbereichs und/oder neben dem Sammelbereich zu positionieren, die den Sammelbereich "von unten" und/oder "von der Seite" beleuchtet, während eine Kamera eine oder mehrere Bildaufnahmen "von oben" erzeugt.

Es denkbar, dass mehrere Beleuchtungsquellen den Sammelbereich aus unterschiedlichen Richtungen beleuchten.

Die Begriffe "Licht" und "Beleuchtung" sollen im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) und/oder oberhalb von 780 nm (infrarotes Licht: 780 nm bis 1000 µm) verwendet wird. Der Bildsensor und die optischen Elemente der Kamera sind üblicherweise an die verwendete elektromagnetische Strahlung angepasst.

In einer Ausführungsform der vorliegenden Offenbarung umfasst das IoT-Gerät eine oder mehrere Beleuchtungsquellen.

In einer Ausfuhrungsform der vorliegenden Offenbarung umfasst der Grundkörper eine oder mehrere Beleuchtungsquellen.

In einer Ausfuhrungsform der vorliegenden Offenbarung umfasst die Haltevorrichtung eine oder mehrere Beleuchtungsquellen.

In einer Ausfuhrungsform der vorliegenden Offenbarung umfasst eine solche Beleuchtungsquelle - unabhängig davon, ob sie Bestandteil des IoT-Geräts oder Bestandteil des Grundkörpers oder Bestandteil der Haltevorrichtung ist - eine oder mehrere lichtemittierende Dioden (LED), auch als Leuchtdioden bezeichnet.

In einer Ausführungsform ist eine solche LED eine Blitz-LED. Eine Blitz-LED ist eine Leuchtdiode, die einen kurzen Lichtimpuls zur Beleuchtung von Motiven beim Erzeugen einer Bildaufnahme erzeugt.

In einer Ausführungsform der vorliegenden Offenbarung ist eine Blitz-LED oder sind mehrere Blitz-LED in Form eines Rings, eines Ringsegments oder mehrerer Ringsegmente ringförmig um das Objektiv der Kamera angeordnet.

In einer Ausführungsform der vorliegenden Offenbarung ist eine Blitz-LED oder sind mehrere Blitz-LED in Form eines Streifens oder mehrerer Streifen oberhalb, neben oder unterhalb des Objektivs der Kamera angeordnet.

Eine weitere Komponente des Kits und/oder des Systems der vorliegenden Offenbarung können Mittel zur Energieversorgung sein. Üblicherweise umfasst das IoT-Gerät Mittel zur Energieversorgung.

Das IoT-Gerät ist üblicherweise für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemische Zellen, Akkumulatoren, Solarzellen, Brennstoffzellen und/oder Generatoren (z.B. in Kombination mit einem Windrad).

In einer Ausführungsform umfasst das IoT-Gerät eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

In einer Ausführungsform der vorliegenden Erfindung umfasst das System und/oder das Kit eine, von dem IoT-Gerät unabhängige Energieversorgungseinheit auf. Diese kann zur (zusätzlichen oder einzigen) Versorgung des IoT-Geräts mit elektrischer Energie dienen. Diese kann zur Versorgung einer oder mehrerer Beleuchtungseinheiten mit elektrischer Energie dienen. In einer Ausführungsform der vorliegenden Offenbarung ist diese Energieversorgungseinheit in dem Grundkörper untergebracht oder kann in dem Grundkörper untergebracht werden. Dazu kann der Grundkörper ein Volumen zwischen der Grundfläche, der Deckfläche und den Seitenflächen umfassen, in die Energieversorgungseinheit untergebracht ist und/oder untergebracht werden kann.

Diese Energieversorgungseinheit kann beispielsweise ein Akkumulator sein, z.B. ein Lithium-Ionen-Akkumulator.

Eine Energieversorgungseinheit, die in dem Grundkörper eingebracht ist, hat neben dem Effekt der Energieversorgung noch den Effekt, dass sie die Standfestigkeit des Systems der vorliegenden Offenbarung erhöht, da der Schwerpunkt des Systems nach unten (in Richtung der Schwerkraft) verlagert wird.

Eine weitere Komponente des Kits und/oder des Systems der vorliegenden Offenbarung können ein oder mehrere elektrische Verbindungskabel sein, die z.B. das IoT-Gerät mit der separaten Energieversorgungseinheit verbinden und/oder die das IoT-Gerät mit einer oder mehreren Beleuchtungseinheiten verbinden und/oder die eine oder mehrere Beleuchtungseinheiten mit der Energieversorgungseinheit verbinden.

Eine weitere Komponente des Kits und/oder des Systems der vorliegenden Offenbarung kann ein Lockmittel für Gliederfüßer, z.B. ein Pheromon sein.

Eine weitere Komponente des Kits und/oder des Systems der vorliegenden Offenbarung können Befestigungsmittel für ein Lockmittel für Gliederfüßer, z.B. für ein Pheromon sein. Das Befestigungsmittel kann dazu dienen, das Lockmittel innerhalb der Einhausung (im Innenvolumen) und/oder auf der Aufnahmefläche zu platzieren. Das Befestigungsmittel kann z.B. ein Korb oder eine Schafe sein oder umfassen, in den/die das Lockmittel platziert werden kann.

Ein weiterer Gegenstand der vorliegenden Offenbarung ist ein Verfahren.

Das Verfahren umfasst die Schritte:
- Bereitstellen eines Grundkörpers mit einer Aufnahmefläche zur Aufnahme eines mit Klebemittel versehenen Bogens,
- Bereitstellen einer Haltevorrichtung zur Aufnahme eines, eine Kamera umfassenden IoT-Geräts,
- Bereitstellen von Abstandsmitteln zum Fixieren der Haltevorrichtung in einem Abstand zur Fläche des Grundkörpers,
- Bereitstellen einer Einhausung,
- Befestigen der Einhausung an dem Grundkörper und der Haltevorrichtung,
- Fixieren der Haltevorrichtung in dem Abstand zur Aufnahmefläche des Grundkörpers mit Hilfe der Abstandsmittel.

Der Schritt "Bereitstellen einer Einhausung" kann umfassen:
- Bereitstellen eines Faltbogens,
- Erzeugen der Einhausung aus dem Faltbogen.

Das Verfahren kann ferner einen oder mehrere der folgenden Schritte umfassen:
- Platzieren eines mit Klebemittel versehenen Bogens auf der Aufnahmefläche,
- Befestigen eines IoT-Geräts in der Haltevorrichtung,
- Platzieren eines Pheromons innerhalb der Einhausung,
- Beleuchten des mit Klebemittel versehenen Bogens mit elektromagnetischer Strahlung,
- Erzeugen einer oder mehrerer Bildaufnahmen von einem oder mehreren auf dem mit Klebemittel versehenen Bogen befindlichen Gliederfüßern,
- Erkennen und/oder Lokalisieren und/oder Identifizieren eines oder mehrerer Gliederfüßer in der einen oder den mehreren Bildaufnahmen,
- Zählen der Gliederfüßer in der einen oder den mehreren Bildaufnahmen,
- Übermitteln der einen oder der mehreren Bildaufnahmen an ein separates Computersystem,
- Ausgeben der einen oder der mehreren Bildaufnahmen,
- Speichern der einen oder der mehreren Bildaufnahmen,
- Übermitteln einer Information über einen oder mehrere in der einen oder den mehreren Bildaufnahmen erkannten und/oder lokalisierten und/oder identifizierten Gliederfüßern an ein separates Computersystem,
- Ausgeben einer Information über einen oder mehrere in der einen oder den mehreren Bildaufnahmen erkannten und/oder lokalisierten und/oder identifizierten Gliederfüßern,
- Speichern einer Information über einen oder mehrere in der einen oder den mehreren Bildaufnahmen erkannten und/oder lokalisierten und/oder identifizierten Gliederfüßern.

Weitere Ausführungsformen der vorliegenden Offenbarung sind:
1. System umfassend
   - einen Grundkörper mit einer Aufnahmefläche zur Aufnahme eines mit Klebemittel versehenen Bogens,
   - eine Haltevorrichtung zur Aufnahme eines, eine Kamera umfassenden IoT-Geräts,
   - Abstandsmittel zum Fixieren der Haltevorrichtung in einem Abstand zur Aufnahmefläche des Grundkörpers,
   - eine Einhausung zwischen Abstandsmittel und Grundkörper zum Schutz der Aufnahmefläche des Grundkörpers vor Umwelteinflüssen.
2. Das System gemäß Ausführungsform 1, wobei der Grundkörper die Form eines Quaders, eines Würfels, eines Parallelepipeds oder eines Pyramidenstumpfs aufweist, wobei die Grundfläche des Quaders, des Würfels, des Parallelepipeds oder des Pyramidenstumpfs fehlen kann, wobei eine oder mehrere Kanten des Quaders, des Würfels, des Parallelepipeds oder des Pyramidenstumpfs abgerundet sein können.
3. Das System gemäß einer der Ausführungsformen 1 oder 2, wobei der Grundkörper eine Grundfläche und/oder eine Deckfläche umfasst, wobei die Grundfläche und/oder die Deckfläche eine Größe im Bereich von 400 cm² bis 1000 cm² hat.
4. Das System gemäß einer der Ausführungsformen 1 bis 3, wobei der Grundkörper eine Höhe im Bereich von 3 mm bis 50 mm hat.
5. Das System gemäß einer der Ausführungsformen 1 bis 4, wobei der Grundkörper eine Deckfläche umfasst, wobei die Deckfläche die Aufnahmefläche ist oder umfasst.
6. Das System gemäß einer der Ausführungsformen 1 bis 5, wobei die Aufnahmefläche eben ist.
7. Das System gemäß einer der Ausführungsformen 1 bis 6, wobei die Aufnahmefläche rechteckig ist, wobei die Ecken abgerundet sein können.
8. Das System gemäß einer der Ausführungsformen 1 bis 7, wobei die Aufnahmefläche eine Größe im Bereich von 185 mm x 235 mm bis 195 mm x 245 mm hat.
9. Das System gemäß einer der Ausführungsformen 1 bis 8, wobei der Abstand zwischen der Haltevorrichtung und der Aufnahmefläche im Bereich von 7 cm bis 20 cm liegt.
10. Das System gemäß einer der Ausführungsformen 1 bis 9, wobei die Haltevorrichtung ein Schubfach zum Einschieben des IoT-Geräts umfasst.
11. Das System gemäß einer der Ausführungsformen 1 bis 10, wobei die Haltevorrichtung eine Aussparung für ein Kameraobjektiv der Kamera des IoT-Geräts umfasst.
12. Das System gemäß einer der Ausführungsformen 1 bis 11, wobei die Einhausung mindestens zwei Wandungen umfasst, wobei die Wandungen entlang von Kanten in Kontakt mit der Aufnahmefläche stehen und bündig mit der Aufnahmefläche abschließen.
13. Das System gemäß einer der Ausführungsformen 1 bis 12, wobei die Wandungen in einem Winkel von 80° bis 100° zur Aufnahmefläche verlaufen.
14. Das System gemäß einer der Ausführungsformen 1 bis 13, wobei die Wandungen eine oder mehrere Öffnungen umfassen, um Gliederfüßern einen Zugang und/oder Zuflug zur Aufnahmefläche zu ermöglichen.
15. Das System gemäß einer der Ausführungsformen 1 bis 14, wobei die Einhausung ein Dach umfasst, wobei das Dach die Form eines Mansardenflachdaches hat.
16. Das System gemäß einer der Ausführungsformen 1 bis 15, wobei das Dach drei Teilflächen umfasst, eine erste Teilfläche und zwei zweite Teilflächen, wobei die erste Teilfläche parallel zur Aufnahmefläche verläuft.
17. Das System gemäß der Ausfiihrungsform 16, wobei die Haltevorrichtung an der ersten Teilfläche befestigt ist und/oder die erste Teilfläche an der Haltevorrichtung befestigt ist.
18. Das System gemäß einer der Ausführungsformen 16 oder 17, wobei die zwei zweiten Teilflächen die erste Teilfläche an gegenüberliegenden Seiten der ersten Teilfläche einschließen und in einem Winkel von 5° bis 45° zur Aufnahmefläche verlaufen.
19. Das System gemäß einer der Ausführungsformen 1 bis 18, wobei die Einhausung und die Aufnahmefläche ein Volumen definieren, wobei sich die Haltevorrichtung außerhalb des Volumens befindet.
20. Das System gemäß einer der Ausführungsformen 16 bis 19, wobei die erste Teilfläche eine Öffnung umfasst, wobei die Haltevorrichtung eine Öffnung umfasst, wobei die Öffnung in der ersten Teilfläche und die Öffnung in der Haltevorrichtung eine gemeinsame Flucht bilden und sich zumindest teilweise überlappen.
21. Das System gemäß einer der Ausführungsformen 1 bis 20, wobei die Einhausung aus einer oder mehreren Kunststoffstegplatten besteht.
22. Das System gemäß einer der Ausführungsformen 1 bis 21, wobei die Einhausung aus einem Faltbogen erzeugt wurde.
23. Das System gemäß einer der Ausführungsformen 1 bis 22, wobei die Einhausung aus einem Faltbogen gemäß einem der Ausführungsformen 25 bis 46 erzeugt wurde.
24. Das System gemäß einer der Ausführungsformen 1 bis 23, ferner umfassend eine Energieversorgungseinheit, wobei die Energieversorgungseinheit in dem Grundköper untergebracht ist.
25. Kit umfassend:
   - einen Grundkörper mit einer Aufnahmefläche zur Aufnahme eines mit Klebemittel versehenen Bogens,
   - eine Haltevorrichtung zur Aufnahme eines, eine Kamera umfassenden IoT-Geräts,
   - Abstandsmittel zum Fixieren der Haltevorrichtung in einem Abstand zur Aufnahmefläche des Grundkörpers,
   - ein Faltbogen zum Erzeugen einer Einhausung zwischen Abstandsmittel und Grundkörper.
26. Das Kit gemäß Ausführungsform 25, wobei der Faltbogen ein einstückiges, zusammenhängendes Gebilde ist.
27. Das Kit gemäß einer der Ausführungsformen 25 oder 26, wobei der Faltbogen Teilbögen umfasst, die durch Falze voneinander getrennt sind.
28. Das Kit gemäß Ausführungsform 27, wobei alle Falze parallel oder senkrecht zueinander verlaufen.
29. Das Kit gemäß einer der Ausführungsformen 25 bis 28, wobei der Faltbogen aus einer Kunststoffstegplatte besteht.
30. Das Kit gemäß einer der Ausführungsformen 25 bis 29, wobei der Faltbogen Teilbögen umfasst, wobei mindestens zwei Teilbögen mindestens zwei Wandungsflächen bereitstellen, wobei mindestens drei Teilbögen eine Dachfläche bereitstellen, wobei die Dachfläche drei Teilflächen umfasst, wobei eine erste Teilfläche entlang von zwei gegenüberliegenden Seiten der ersten Teilfläche von zwei zweiten Teilflächen der Dachfläche eingeschlossen wird.
31. Das Kit gemäß Ausführungsform 30, wobei jede der mindestens zwei Wandungsflächen durch einen Falz von der Dachfläche getrennt ist.
32. Das Kit gemäß einer der Ausführungsformen 30 oder 31, wobei eine der zwei zweiten Teilflächen der Dachfläche über einen Falz mit einer ersten Wandungsfläche verbunden ist und die andere der zwei zweiten Teilflächen über einen Falz mit einer zweiten Wandfläche verbunden ist.
33. Das Kit gemäß einer der Ausführungsformen 30 bis 32, wobei die erste Teilfläche der Dachfläche durch einen Falz mit einer dritten Wandungsfläche verbunden ist und durch einen weiteren Falz mit einer vierten Wandungsfläche verbunden ist.
34. Das Kit gemäß einer der Ausführungsformen 25 bis 33, wobei der Faltbogen Teilbögen umfasst, wobei mindestens zwei Teilbögen mindestens zwei Wandungsflächen bereitstellen, wobei mindestens eine der mindestens zwei Wandungsflächen mindestens eine durch Perforation und/der Stanzung und/oder Kerbung vordefinierte Öffnung aufweisen.
35. Das Kit gemäß einer der Ausführungsformen 25 bis 34, wobei der Faltbogen Teilbögen umfasst, wobei mindestens zwei Teilbögen mindestens zwei Wandungsflächen bereitstellen, wobei mindestens eine der mindestens zwei Wandungsflächen durch Perforationen und/der Stanzungen und/oder Kerbungen vordefinierte Öffnungen unterschiedlicher Größe aufweist.
36. Das Kit gemäß einer der Ausführungsformen 30 bis 35, wobei die erste Teilfläche der Dachfläche eine Öffnung für ein Kameraobjektiv der Kamera des IoT-Geräts aufweist oder die erste Teilfläche der Dachfläche eine durch eine Performation und/oder Stanzung und/oder Kerbung vordefinierte Öffnung für ein Kameraobjektiv der Kamera des IoT-Geräts aufweist.
37. Das Kit gemäß einer der Ausführungsformen 25 bis 36, ferner umfassend einen mit Klebemittel versehenen Bogens.
38. Das Kit gemäß einer der Ausführungsformen 25 bis 37, wobei der Bogen rechteckig ist, wobei die Ecken abgerundet sein können.
39. Das Kit gemäß einer der Ausführungsformen 25 bis 38, wobei der Bogen eine mit Leim beschichtete Karte oder Tafel ist.
40. Das Kit gemäß einer der Ausführungsformen 25 bis 39, wobei der Bogen eine Größe im Bereich von 100 mm x 200 mmm bis 200 mm x 250 mm hat.
41. Das Kit gemäß einer der Ausführungsformen 25 bis 40, ferner umfassend ein Lockmittel zum Anlocken von Gliederfüßern.
42. Das Kit gemäß Ausführungsform 41, wobei das Lockmittel ein Pheromon ist oder umfasst.
43. Das Kit gemäß einer der Ausführungsformen 25 bis 42, ferner umfassend ein IoT-Gerät, wobei das IoT-Gerät eine Kamera umfasst.
44. Das Kit gemäß einer der Ausführungsformen 25 bis 43, ferner umfassend eine Beleuchtungseinheit.
45. Das Kit gemäß einer der Ausführungsformen 25 bis 44, ferner umfassend eine Energieversorgungseinheit.
46. Das Kit gemäß einer der Ausführungsformen 25 bis 45, ferner umfassend elektrische Verbindungskabel.
47. Verfahren umfassend:
   - Bereitstellen eines Grundkörpers mit einer Aufnahmefläche zur Aufnahme eines mit Klebemittel versehenen Bogens,
   - Bereitstellen einer Haltevorrichtung zur Aufnahme eines, eine Kamera umfassenden IoT-Geräts,
   - Bereitstellen von Abstandsmitteln zum Fixieren der Haltevorrichtung in einem Abstand zur Fläche des Grundkörpers,
   - Bereitstellen einer Einhausung,
   - Befestigen der Einhausung an dem Grundkörper und der Haltevorrichtung,
   - Fixieren der Haltevorrichtung in dem Abstand zur Aufnahmefläche des Grundkörpers mit Hilfe der Abstandsmittel.
48. Das Verfahren umfassend:
   - Bereitstellen eines Kits gemäß einer der Ausführungsformen 25 bis 46,
   - Erzeugen eines Systems gemäß einer der Ausführungsformen 1 bis 24 auf Basis des Kits.
49. Das Verfahren gemäß einer der Ausführungsformen 47 oder 48, wobei der Schritt Bereitstellen einer Einhausung umfasst:
   - Bereitstellen eines Faltbogens gemäß einem der Ansprüche 25 bis 46,
   - Erzeugen einer Einhausung gemäß einem der Ansprüche 1 bis 24 aus dem Faltbogen.
50. Das Verfahren gemäß einer der Ausführungsformen 47 bis 49, ferner umfassend:
   - Platzieren eines mit Klebemittel versehenen Bogens auf der Aufnahmefläche.
51. Das Verfahren gemäß einer der Ausführungsformen 47 bis 50, ferner umfassend:
   - Befestigen eines IoT-Geräts in der Haltevorrichtung.
52. Das Verfahren gemäß einer der Ausführungsformen 47 bis 51, ferner umfassend:
   - Platzieren eines Pheromons innerhalb der Einhausung.
53. Das Verfahren gemäß einer der Ausführungsformen 47 bis 52, ferner umfassend:
   - Beleuchten des mit Klebemittel versehenen Bogens mit elektromagnetischer Strahlung.
54. Das Verfahren gemäß einer der Ausführungsformen 47 bis 53, ferner umfassend:
   - Erzeugen einer oder mehrerer Bildaufnahmen von einem oder mehreren auf dem mit Klebemittel versehenen Bogen befindlichen Gliederfüßern.
55. Das Verfahren gemäß Ausführungsform 54, ferner umfassend:
   - Erkennen und/oder Lokalisieren und/oder Identifizieren eines oder mehrerer Gliederfüßer in der einen oder den mehreren Bildaufnahmen.
56. Das Verfahren gemäß einer der Ausführungsformen 54 oder 55, ferner umfassend:
   - Zählen der Gliederfüßer in der einen oder den mehreren Bildaufnahmen.
57. Das Verfahren gemäß einer der Ausführungsformen 54 bis 56, ferner umfassend:
   - Übermitteln der einen oder der mehreren Bildaufnahmen an ein separates Computersystem,
58. Das Verfahren gemäß einer der Ausführungsformen 54 bis 57, ferner umfassend:
   - Ausgeben der einen oder der mehreren Bildaufnahmen.
59. Das Verfahren gemäß einer der Ausführungsformen 54 bis 58, ferner umfassend:
   - Speichern der einen oder der mehreren Bildaufnahmen.
60. Das Verfahren gemäß einer der Ausführungsformen 54 bis 59, ferner umfassend:
   - Übermitteln einer Information über einen oder mehrere in der einen oder den mehreren Bildaufnahmen erkannten und/oder lokalisierten und/oder identifizierten Gliederfüßern an ein separates Computersystem.
61. Das Verfahren gemäß einer der Ausführungsformen 54 bis 60, ferner umfassend:
   - Ausgeben einer Information über einen oder mehrere in der einen oder den mehreren Bildaufnahmen erkannten und/oder lokalisierten und/oder identifizierten Gliederfußern.
62. Das Verfahren gemäß einer der Ausführungsformen 54 bis 61, ferner umfassend:
   - Speichern einer Information über einen oder mehrere in der einen oder den mehreren Bildaufnahmen erkannten und/oder lokalisierten und/oder identifizierten Gliederfüßern.

Die Gegenstände der vorliegenden Offenbarung werden nachfolgend anhand von Zeichnungen näher erläutert, ohne die vorliegende Offenbarung auf die in den Zeichnungen dargestellten Merkmale und/oder Merkmalskombinationen beschränken zu wollen.

Gleiche Bezugszeichen kennzeichnen stets die gleichen Komponenten/Merkmale.

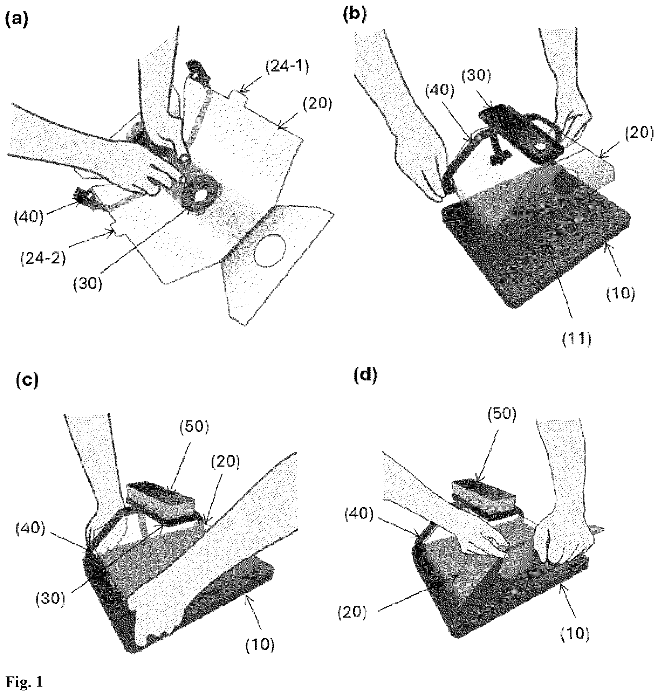

Fig. 1 zeigt beispielhaft und schematisch ein System der vorliegenden Offenbarung und wie dieses aus den Komponenten erzeugt wird.

Fig. 1(a) zeigt ein Beispiel für das Befestigen einer Einhausung (20) an einer Haltevorrichtung (30). An der Haltevorrichtung (30) sind Abstandsmittel (40) angebracht/vorhanden; die Abstandsmittel (40) können ein Bestandteil der Haltevorrichtung (30) oder eine separate Komponente sein.

Fig. 1(b) zeigt beispielhaft, wie ein Gebilde umfassend eine Einhausung (20), eine Haltevorrichtung (30) und Abstandsmittelt (40) auf einen Grundkörper (10) aufgesetzt werden. Der Grundkörper (10) umfasst eine Aufnahmefläche (11) auf der ein mit Klebemittel versehener Bogen platziert werden kann.

Fig. 1(c) und 1(d) zeigen beispielhaft, wie das Gebilde aus Fig. 1(b) mit dem Grundkörper (10) verbunden wird. Dazu werden die Laschen (24-1, 24-2), die in Fig. 1(a) dargestellt sind, in entsprechende Schlitze in dem Grundkörper (10) gesteckt. In Fig. 1(c) und 1(d) ist ferner dargestellt, dass ein IoT-Gerät (50) in die Haltevorrichtung (30) eingeschoben ist.

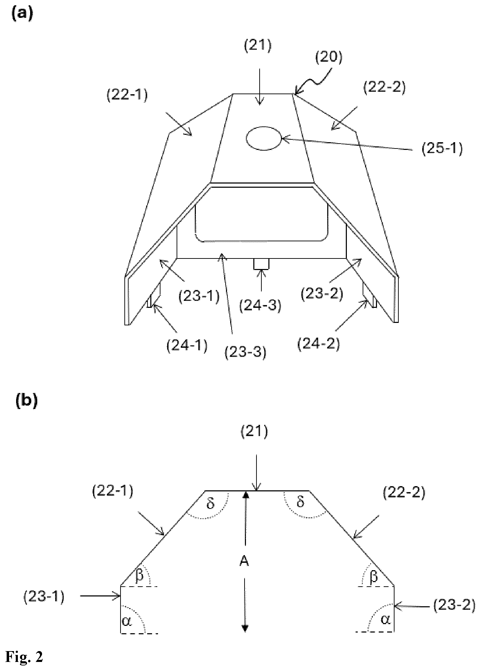

Fig. 2 zeigt beispielhaft und schematisch eine Einhausung.

Fig. 2(a) zeigt die Einhausung (20) in einer perspektivischen Darstellung von vorn. Zur besseren Darstellung ist die vordere Wandung in der Darstellung entfernt, so dass ein Blick ins Innere der Einhausung (20) möglich ist. Die Einhausung (20) umfasst eine Dachfläche. Die Dachfläche wird durch eine erste Teilfläche (21) und zwei zweite Teilflächen (22-1, 22-2) gebildet. Die erste Teilfläche (21) ist eben (planar) ausgeführt und beim Verbinden der Einhausung mit einem Grundkörper (wie in Fig. 1 dargestellt) parallel zur Aufnahmefläche des Grundkörpers ausgeführt. Die erste Teilfläche (21) umfasst eine Öffnung (25-1). Durch diese Öffnung (25-1) kann elektromagnetische Strahlung aus dem Inneren der Einhausung (20) nach außen gelangen, um z.B. auf einen Kamerasensor einer Kamera eines IoT-Geräts zu fallen.

Die in Fig. 2(a) dargestellte Einhausung (20) umfasst eine erste Wandung mit einer ersten Wandfläche (23-1), eine zweite Wandung mit einer zweiten Wandfläche (23-2) und eine dritte Wandung mit einer dritten Wandfläche (23-3). Die vierte Wandung ist, wie oben geschrieben, in der Darstellung nicht dargestellt.

In die dritte Wandung / dritte Wandfläche (23-3) ist eine Öffnung eingebracht, durch die Gliederfüßer in das Innere der Einhausung (20) gelangen können.

An den Wandungen sind Laschen (24-1, 24-2, 24-3) angebracht, mit denen die Einhausung mit einem Grundkörper verbunden werden kann (wie in Fig. 1 dargestellt).

Fig. 2(b) zeigt die in Fig. 2(a) perspektivisch dargestellte Einhausung schematisch von vorne. Die erste Wandfläche (23-1) und die zweite Wandfläche (23-2) verlaufen in einem Winkel von α=90° gegenüber der Ebene, in der die Aufnahmefläche des Grundkörpers liegt (dargestellt durch eine gestrichelte Linie).

Die zweiten Teilflächen (22-1, 22-2) der Dachfläche verlaufen in einem Winkel von β=45° gegenüber der Ebene, in der die Aufnahmefläche des Grundkörpers liegt.

Die erste Teilfläche (21) der Dachfläche verläuft in einem Winkel δ=135° zur Teilfläche (22-1) und zur Teilfläche (22-2).

Die erste Teilfläche (21) der Dachfläche hat einen Abstand A von der Aufnahmefläche.

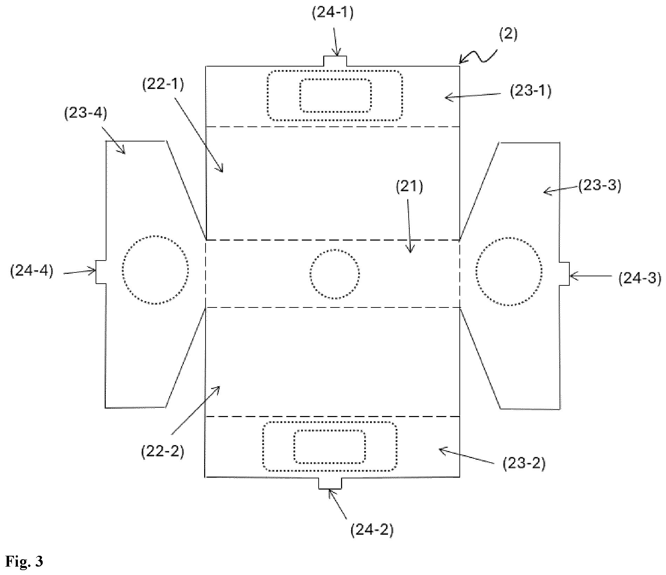

Fig. 3 zeigt beispielhaft und schematisch einen Faltbogen, aus dem eine Einhausung erzeugt werden kann.

Der Faltbogen (2) ist ein einstückiges, zusammenhängendes Gebilde.

Der Faltbogen (2) umfasst mehrere Teilbögen, die durch Falze (durch gestrichelte Linien dargestellt) voneinander getrennt sind. Entlang der Falze lässt sich der Faltbogen (2) falten, um die Winkel zwischen den Teilbögen zu verändern.

Die Teilbögen werden anhand der Bezeichnungen der Flächen der Einhausung benannt. Jedem Teilbogen entspricht eine Fläche der Einhausung.

Ein erster Teilbogen stellt die erste Teilfläche (21) der Dachfläche der Einhausung bereit. Ein zweiter Teilbogen stellt eine zweite Teilfläche (22-1) der Dachfläche der Einhausung bereit. Ein dritter Teilbogen stellt eine weitere zweite Teilfläche (22-2) der Dachfläche der Einhausung bereit. Ein vierter Teilbogen stellt eine erste Wandungsfläche (23-1) der Einhausung bereit. Ein fünfter Teilbogen stellt eine zweite Wandungsfläche (23-2) der Einhausung bereit. Ein sechster Teilbogen stellt eine dritte Wandungsfläche (23-3) der Einhausung bereit. Ein siebter Teilbogen stellt eine vierte Wandungsfläche (23-4) der Einhausung bereit.

Die erste Teilfläche (21) hat eine rechteckige Form.

Die erste Teilfläche (21) ist durch Falze von den zweiten Teilflächen (22-1, 22-2) getrennt und wird an gegenüberliegenden Seiten von den zweiten Teilflächen (22-1, 22-2) eingeschlossen.

Die erste Teilfläche (21) ist durch einen Falz von der dritten Wandungsfläche (23-3) getrennt. Die erste Teilfläche (21) ist durch einen Falz von der vierten Wandungsfläche (23-4) getrennt. Die erste Teilfläche (21) wird an gegenüberliegenden Seiten von der dritten Wandungsfläche (23-3) und der vierten Wandungsfläche (23-4) eingeschlossen.

Die Teilfläche (22-1) hat eine rechteckige Form. Die Teilfläche (22-1) ist durch einen Falz von der ersten Wandungsfläche (23-1) getrennt.

Die Teilfläche (22-2) hat eine rechteckige Form. Die Teilfläche (22-2) ist durch einen Falz von der zweiten Wandungsfläche (23-2) getrennt.

An der ersten Wandungsfläche (23-1), der zweiten Wandungsfläche (23-2), der dritten Wandungsfläche (23-3) und der vierten Wandungsfläche (23-4) sind Laschen (24-1, 24-2, 24-3, 24-4) angebracht, die zum Verbinden der Einhausung mit einem Grundkörper dienen können. Es ist auch möglich, dass der Teilbogen Perforationen und/oder Stanzungen und/oder Kerbungen z.B. entlang der Falze umfassen, die es erlauben, die dritte und/oder die vierte Wandungsfläche zu entfernen.

In verschiedenen Flächen sind Perforationen (dargestellt durch gepunktete Linien) eingebracht. Entlang der Perforationen können Teile aus den Teilbögen entfernt werden, um Öffnungen zu erzeugen.

## Patentansprüche

1. System umfassend
- einen Grundkörper mit einer Aufnahmefläche zur Aufnahme eines mit Klebemittel versehenen Bogens,
- eine Haltevorrichtung zur Aufnahme eines, eine Kamera umfassenden IoT-Geräts,
- Abstandsmittel zum Fixieren der Haltevorrichtung in einem Abstand zur Aufnahmefläche des Grundkörpers,
- eine Einhausung zwischen Abstandsmittel und Grundkörper zum Schutz der Aufnahmefläche des Grundkörpers vor Umwelteinflüssen.

2. System gemäß Anspruch 1, wobei der Grundkörper die Form eines Quaders, eines Würfels, eines Parallelepipeds oder eines Pyramidenstumpfs aufweist, wobei die Grundfläche des Quaders, des Würfels, des Parallelepipeds oder des Pyramidenstumpfs fehlen kann, wobei eine oder mehrere Kanten des Quaders, des Würfels, des Parallelepipeds oder des Pyramidenstumpfs abgerundet sein können, wobei der Grundkörper eine Deckfläche umfasst, wobei die Deckfläche eine Größe im Bereich von 400 cm² bis 1000 cm² hat und der Grundkörper eine Höhe im Bereich von 3 mm bis 50 mm hat.

3. System gemäß Anspruch 1, wobei der Grundkörper eine Deckfläche umfasst, wobei die Deckfläche die Aufnahmefläche ist oder umfasst, wobei die Aufnahmefläche eben ist, wobei die Aufnahmefläche rechteckig ist, wobei die Ecken abgerundet sein können, wobei die Aufnahmefläche eine Größe im Bereich von 185 mm x 235 mm bis 195 mm x 245 mm hat.

4. System gemäß einem der Ansprüche 1 bis 3, wobei der Abstand zwischen der Haltevorrichtung und der Aufnahmefläche im Bereich von 7 cm bis 20 cm liegt, wobei die Haltevorrichtung ein Schubfach zum Einschieben des IoT-Geräts umfasst, wobei die Haltevorrichtung eine Aussparung für ein Kameraobjektiv der Kamera des IoT-Geräts umfasst.

5. System gemäß einem der Ansprüche 1 bis 4, wobei die Einhausung mindestens zwei Wandungen umfasst, wobei die Wandungen entlang von Kanten in Kontakt mit der Aufnahmefläche stehen und bündig mit der Aufnahmefläche abschließen, wobei die Wandungen in einem Winkel von 80° bis 100° zur Aufnahmefläche verlaufen, wobei die Wandungen eine oder mehrere Öffnungen umfassen, um Gliederfüßern einen Zugang und/oder Zuflug zur Aufnahmefläche zu ermöglichen, wobei die Einhausung ein Dach umfasst, wobei das Dach die Form eines Mansardenflachdaches hat.

6. System gemäß einem der Ansprüche 1 bis 5, wobei das Dach drei Teilflächen umfasst, eine erste Teilfläche und zwei zweite Teilflächen, wobei die erste Teilfläche parallel zur Aufnahmefläche verläuft, wobei die Haltevorrichtung an der ersten Teilfläche befestigt ist und/oder die erste Teilfläche an der Haltevorrichtung befestigt ist, wobei die zwei zweiten Teilflächen die erste Teilfläche an gegenüberliegenden Seiten der ersten Teilfläche einschließen und in einem Winkel von 5° bis 45° zur Aufnahmefläche verlaufen, wobei die erste Teilfläche eine Öffnung umfasst, wobei die Haltevorrichtung eine Öffnung umfasst, wobei die Öffnung in der ersten Teilfläche und die Öffnung in der Haltevorrichtung eine gemeinsame Flucht bilden und sich zumindest teilweise überlappen, wobei die Einhausung und die Aufnahmefläche ein Volumen definieren, wobei sich die Haltevorrichtung außerhalb des Volumens befindet.

7. System gemäß einem der Ansprüche 1 bis 6, wobei die Einhausung aus einer oder mehreren Kunststoffstegplatten besteht, wobei die Einhausung aus einem Faltbogen gemäß einem der Ausführungsformen 8 bis 12 erzeugt wurde.

8. Kit umfassend:
- einen Grundkörper mit einer Aufnahmefläche zur Aufnahme eines mit Klebemittel versehenen Bogens,
- eine Haltevorrichtung zur Aufnahme eines, eine Kamera umfassenden IoT-Geräts,
- Abstandsmittel zum Fixieren der Haltevorrichtung in einem Abstand zur Aufnahmefläche des Grundkörpers,
- ein Faltbogen zum Erzeugen einer Einhausung zwischen Abstandsmittel und Grundkörper.

9. Kit gemäß Anspruch 8, wobei der Faltbogen ein einstückiges, zusammenhängendes Gebilde ist, wobei der Faltbogen Teilbögen umfasst, die durch Falze voneinander getrennt sind, wobei alle Falze parallel oder senkrecht zueinander verlaufen.

10. Kit gemäß einem der Ansprüche 8 oder 9, wobei der Faltbogen aus einer Kunststoffstegplatte besteht.

11. Kit gemäß einem der Ansprüche 8 bis 10, wobei der Faltbogen Teilbögen umfasst, wobei mindestens zwei Teilbögen mindestens zwei Wandungsflächen bereitstellen, wobei mindestens drei Teilbögen eine Dachfläche bereitstellen, wobei die Dachfläche drei Teilflächen umfasst, wobei eine erste Teilfläche entlang von zwei gegenüberliegenden Seiten der ersten Teilfläche von zwei zweiten Teilflächen der Dachfläche eingeschlossen wird, wobei jede der mindestens zwei Wandungsflächen durch einen Falz von der Dachfläche getrennt ist, wobei eine der zwei zweiten Teilflächen der Dachfläche über einen Falz mit einer ersten Wandungsfläche verbunden ist und die andere der zwei zweiten Teilflächen über einen Falz mit einer zweiten Wandfläche verbunden ist, wobei die erste Teilfläche der Dachfläche durch einen Falz mit einer dritten Wandungsfläche verbunden ist und durch einen weiteren Falz mit einer vierten Wandungsfläche verbunden ist, wobei mindestens eine der mindestens zwei Wandungsflächen mindestens eine durch Perforation und/der Stanzung und/oder Kerbung vordefinierte Öffnung aufweist, wobei die erste Teilfläche der Dachfläche eine Öffnung für ein Kameraobjektiv der Kamera des IoT-Geräts aufweist oder die erste Teilfläche der Dachfläche eine durch eine Performation und/oder Stanzung und/oder Kerbung vordefinierte Öffnung für ein Kameraobjektiv der Kamera des IoT-Geräts aufweist.

12. Kit gemäß einem der Ansprüche 8 bis 11, ferner umfassend einen mit Klebemittel versehenen Bogen, wobei der Bogen rechteckig ist, wobei die Ecken abgerundet sein können, wobei der Bogen eine Größe im Bereich von 100 mm x 200 mmm bis 200 mm x 250 mm hat.

13. Verfahren umfassend:
- Bereitstellen eines Kits gemäß einem der Ansprüche 8 bis 12,
- Erzeugen eines Systems gemäß einem der Ansprüche 1 bis 7 auf Basis des Kits.

14. Verfahren gemäß Anspruch 13 umfassend:
- Bereitstellen eines Grundkörpers mit einer Aufnahmefläche zur Aufnahme eines mit Klebemittel versehenen Bogens,
- Bereitstellen einer Haltevorrichtung zur Aufnahme eines, eine Kamera umfassenden IoT-Geräts,
- Bereitstellen von Abstandsmitteln zum Fixieren der Haltevorrichtung in einem Abstand zur Fläche des Grundkörpers,
- Bereitstellen einer Einhausung,
- Befestigen der Einhausung an dem Grundkörper und der Haltevorrichtung,
- Fixieren der Haltevorrichtung in dem Abstand zur Aufnahmefläche des Grundkörpers mit Hilfe der Abstandsmittel.

15. Verfahren gemäß Anspruch 14, wobei der Schritt Bereitstellen einer Einhausung umfasst:
- Bereitstellen eines Faltbogens gemäß einem der Ansprüche 8 bis 12,
- Erzeugen einer Einhausung gemäß einem der Ansprüche 1 bis 7 aus dem Faltbogen.

16. Verfahren gemäß einem der Ansprüche 13 bis 15, ferner umfassend:
- Platzieren eines mit Klebemittel versehenen Bogens auf der Aufnahmefläche, und/oder
- Befestigen eines IoT-Geräts in der Haltevorrichtung, und/oder
- Platzieren eines Pheromons innerhalb der Einhausung, und/oder
- Beleuchten des mit Klebemittel versehenen Bogens mit elektromagnetischer Strahlung, und/oder
- Erzeugen einer oder mehrerer Bildaufnahmen von einem oder mehreren auf dem mit Klebemittel versehenen Bogen befindlichen Gliederfüßern, und/oder
- Erkennen und/oder Lokalisieren und/oder Identifizieren eines oder mehrerer Gliederfüßer in der einen oder den mehreren Bildaufnahmen, und/oder
- Zählen der Gliederfüßer in der einen oder den mehreren Bildaufnahmen, und/oder
- Übermitteln der einen oder der mehreren Bildaufnahmen an ein separates Computersystem, und/oder
- Ausgeben der einen oder der mehreren Bildaufnahmen, und/oder
- Speichern der einen oder der mehreren Bildaufnahmen, und/oder
- Übermitteln einer Information über einen oder mehrere in der einen oder den mehreren Bildaufnahmen erkannten und/oder lokalisierten und/oder identifizierten Gliederfüßern an ein separates Computersystem, und/oder
- Ausgeben einer Information über einen oder mehrere in der einen oder den mehreren Bildaufnahmen erkannten und/oder lokalisierten und/oder identifizierten Gliederfüßern, und/oder
- Speichern einer Information über einen oder mehrere in der einen oder den mehreren Bildaufnahmen erkannten und/oder lokalisierten und/oder identifizierten Gliederfüßern.
